# EUROPEAN PATENT APPLICATION

(11) **EP 4 803 990 A1**
(43) Date of publication of application: **09.09.2026**
(21) Application number: 24884766.7
(22) Date of filing: 29.10.2024
(51) Int. Cl.: G06F 3/0481

(54) **MEDIA CONTENT DISPLAY METHOD AND APPARATUS, ELECTRONIC DEVICE, AND STORAGE MEDIUM**

(30) Priority: 31.10.2023 CN 202311434216
(71) Applicant: Beijing Zitiao Network Technology Co., Ltd., Beijing 100190 (CN)
(72) Inventor: YAN, Yilan, Beijing 100028 (CN); LI, Yaping, Beijing 100028 (CN); ZHANG, Shengjun, Beijing 100028 (CN)
(74) Representative: Grünecker Patent- und Rechtsanwälte PartG mbB
(86) International application number: PCT/CN2024/128298
(87) International publication number: WO 2025/092764

(57) **Abstract**

Method, apparatuses, electronic devices and storage media for displaying media content are provided. The method, applied on a first user side, includes: receiving (S101) target interaction information sent by at least one second user to the first user, the target interaction information being associated with a first media content; displaying (S102), in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; and displaying (S103) the second media content in the media content display interface in response to a display operation of the second media content.

## Description

This application claims priority to Chinese Patent Application No. 202311434216.4, filed on Oct. 31, 2023, and entitled "METHOD, APPARATUS, ELECTRONIC DEVICE AND STORAGE MEDIUM FOR DISPLAYING MEDIA CONTENT", the entirety of which is incorporated herein by reference.

### FIELD

The embodiment of the disclosure relates to the technical field of computers, in particular to a method, an apparatus, an electronic device and a storage medium for displaying media content.

### BACKGROUND

In some applications, the user may send comment information for media content when viewing the media content, and may mention one or more other users in the comment information. After the user sends the comment information mentioning other user or shares the media content in direct message to other user, the other user may view the notification message about the comment information in the message notification.

### SUMMARY

According to a first aspect, an embodiment of the disclosure provides a method for displaying media content, applied on a first user side, the method comprising: receiving target interaction information sent by at least one second user to the first user, the target interaction information being associated with a first media content; displaying, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; displaying the second media content in the media content display interface in response to a display operation of the second media content.

According to a second aspect, an embodiment of the disclosure provides an apparatus for displaying media content, applied on a first user side, the apparatus comprising: an information receiving module configured to receive target interaction information sent by at least one second user to the first user, the target interaction information being associated with the first media content; a first display module configured to display, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; a second display module configured to display the second media content in the media content display interface in response to a display operation of the second media content.

According to a third aspect, an embodiment of this disclosure provides an electronic device, comprising: one or more processor; and a memory storing one or more programs that, when executed by the one or more processor, enable the one or more processor to perform the method for displaying media content according to embodiments of this disclosure.

According to a third aspect, an embodiment of this disclosure provides a computer-readable storage medium storing thereon computer instructions that, when executed by a processor, implement the method for displaying media content according to embodiments of this disclosure.

### BRIEF DESCRIPTION OF DRAWINGS

The above and other features, advantages, and aspects of various embodiments of the disclosure will become more apparent from the following detailed description taken in conjunction with the accompanying drawings. Throughout the drawings, the same or similar reference numbers refer to the same or similar elements. It should be understood that the drawings are schematic, and elements and elements are not necessarily drawn to scale.
FIG. 1 is a schematic flowchart of a method for displaying media content according to an embodiment of the disclosure;
FIG. 2 is a schematic diagram of displaying a first media content according to an embodiment of the disclosure;
FIG. 3 is a schematic diagram of displaying a second media content according to an embodiment of the disclosure;
FIG. 4 is a schematic diagram of display of target interaction information according to an embodiment of the disclosure;
FIG. 5 is a schematic flowchart of another method for displaying media content according to an embodiment of the disclosure;
FIG. 6 is a schematic diagram of a sending manner of reply information according to an embodiment of the disclosure;
FIG. 7 is a schematic diagram of another sending manner of reply information according to an embodiment of the disclosure;
FIG. 8 is a schematic diagram of still another sending manner of reply information according to an embodiment of the disclosure;
FIG. 9 is a schematic diagram of display of reply information according to an embodiment of the disclosure;
FIG. 10 is a structural block diagram of an apparatus for displaying media content according to an embodiment of the disclosure; and
FIG. 11 is a schematic structural diagram of an electronic device according to an embodiment of the disclosure.

### DETAILED DESCRIPTION

The embodiments of the disclosure will be described in more detail below with reference to the accompanying drawings. While certain embodiments of the disclosure are shown in the drawings, it is to be understood that the disclosure may be implemented in various forms, and should not be construed as limited to the embodiments set forth herein, and vice versa. It should be understood that the drawings and embodiments of the disclosure are for exemplary purposes only and are not intended to limit the scope of the disclosure.

It should be understood that the steps recited in the method embodiments of the disclosure may be performed in different orders, and/or in parallel. Further, the method embodiments may include additional steps and/or omit performing the illustrated steps. The scope of the disclosure is not limited in this respect.

As used herein, the terms "comprise" and its variants used herein are to be read as open terms that mean "include, but is not limited to". The term "based on" is to be read as "based at least in part on". The term "one embodiment" is to be read as "at least one embodiment", the term "another embodiment" is to be read as "at least one another embodiment", and the term "some embodiments" is to be read as "at least some embodiments." The relevant definitions of other terms will be given below.

It should be noted that the concepts of "first," "second" and the like mentioned in the present disclosure are only used to distinguish between different apparatuses, modules or units, rather than limiting the order or interdependence of the functions performed by these apparatuses, modules or units.

It should be noted that modifications "one" and "more" mentioned in the present disclosure are examples but not limiting, and should be understood as "one or more" to those skilled in the art unless otherwise specified.

Names of messages or information exchanged between the plurality of apparatuses in implementations of the present disclosure are used for illustrative purposes only and are not intended to limit the scope of those messages or information.

It will be appreciated that before using the technical solution disclosed in each embodiment of the present disclosure, users should be informed of the type, the scope of use, the use scenario, etc. of the personal information involved in the present disclosure in an appropriate manner in accordance with relevant laws and regulations, and the user's authorization should be obtained.

For example, in response to receiving an active request from a user, a prompt information is sent to the user to explicitly prompt the user that the operation requested by the user will need to obtain and use the user's personal information. Thus, users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving an active request from a user, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above notification and acquisition of user authorization process are only schematic and do not limit the implementations of the present disclosure. Other methods that meet relevant laws and regulations may also be applied to the implementation of the present disclosure.

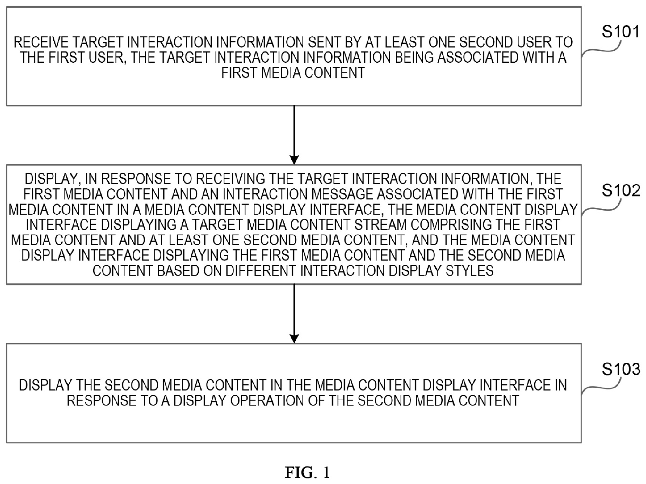

FIG. 1 is a schematic flowchart of a method for displaying media content according to an embodiment of the disclosure. The method may be applied on a first user side, and may be performed by an apparatus for displaying media content. The apparatus may be implemented by software and/or hardware, may be disposed in an electronic device, and is typically disposed in a mobile phone or a tablet computer. The method for displaying media content provided in the embodiments of the disclosure is applicable to a scenario in which an interaction message associated with interaction information received by a user is displayed in a media content display interface. As shown in FIG. 1, the method for displaying media content provided in this embodiment may comprise the following steps.

S101: receiving target interaction information sent by at least one second user to the first user, the target interaction information being associated with a first media content.

The first user may be a current user, for example, a user who currently receives interaction information associated with the media content. The second user may be a user who sends interaction information associated with the media content to the first user.

The target interaction information may be interaction information received by the first user and associated with the media content. For example, the target interaction information may be interaction information received by the first user and associated with the media, but has not been viewed by the first user. The target interaction information sent to the first user may be associated with the first user, for example, the information content of the target interaction information may mention (for example, @) the first user. In other words, the target interaction information may be interaction information in which the first user is mentioned, or the target interaction information may be postscript when other users send media content to the first user via direct message.

The first media content may be media content associated with the target interaction information, for example, media content interacted with through the target interaction information. In this regard, the target interaction information may be interaction information for the first media content, such as comment information and/or bullet comment information for the first media content, and the like. The following for example uses the comment information for the first media content as the target interaction information, in which the display manners of the user interaction information is enriched. It may be understood that the first media content associated with different target interaction information may be the same or different.

In this embodiment, the second user may view the first media content and send the target interaction information associated with the first media content to the first user.

Taking a comment scenario as an example, the second user may view the first media content, send comment information for the first media content, and may mention the first user in the comment information. In this case, the comment information may be sent to the first user as the target interaction information. Correspondingly, the first user side may receive the target interaction information sent by the one or more second users for the first media content, in which the first user is mentioned.

S102: displaying, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles.

The media content display interface may be a display interface for displaying the first media content and the at least one second media content. The second media content and the first media content may be different media content. For example, the first media content may be media content associated with the target interaction information received by the first user, while the second media content may be media content not associated with the target interaction information received by the first user. Taking a comment scenario as an example, the first media content may comprise comment information in which the first user is mentioned, while the second media content may not comprise the comment information in which the first user is mentioned. In other words, none of the comment information of the second media content mentions the first user.

The first media content and the second media content may have different interaction display styles when displayed in the media content display interface. For example, when the first media content is displayed in the media content display interface, the interaction message associated with the first media content and/or the reply control for the target interaction information may be further displayed. Further, when the second media content is displayed in the media content display interface, because the second media content does not comprise the interaction information sent to the first user, the interaction message associated with the second media content and/or the reply control for the interaction information may not be displayed.

The interaction message associated with the first media content may be a message related to target interaction information associated with the first media content. The interaction message may include target interaction information and/or interaction prompt information for the target interaction information. The interaction prompt information may be used to prompt that there is target interaction information associated with the first media content, for example, to prompt that the first media content has the comment information in which the first user is mentioned. The information content of the interaction prompt information may be set as required. For example, the interaction prompt information may include a user identifier of the second user sending the target interaction prompt information, prompt content, and/or at least part of information content of the target interaction information. The user identifier of the second user may include, for example, an avatar and/or a nickname of the second user. The prompt content may be used to inform the first user of the reason for the prompt. For example, the prompt content may be used to prompt the first user that he/she is mentioned, for example, "mention you" or "@ you". Optionally, the interaction prompt information presents at least part of information content of the target interaction information. For example, the interaction prompt information may include information content with character less than or equal to a preset number in the target interaction information.

The target media content stream may be a media content stream of the media content display interface, and the media content display interface may display media content based on the target media content stream. The plurality of media content in the target media content stream may comprise the first media content and the at least one second media content. The plurality of media content in the target media content stream may be switched by, for example, an up-down sliding operation.

For example, when the target interaction information is not received, the target media content stream may include only at least one second media content. After receiving the target interaction information sent by the second user, the first media content associated with the target interaction information may be added to a predetermined position in the target media content stream. In such way, the first user may view the first media content and the interaction message associated with the first media content in the media content display interface.

The predetermined position may be a position in the target media content stream where the first media content associated with the target interaction information is added after the reception of the target interaction information. The predetermined position may be set as required. For example, the predetermined position may be a position separated from a currently displayed media content in the media content display interface by a specified number of media contents, or a position of the n-th media content in the target media content stream, or a position separated from the currently preloaded latest media content in the target media content stream by specified number of media contents, or the like. Optionally, the first media content is configured to be added to a predetermined position of the target media content stream in response to the reception of the target interaction information. The predetermined position comprises a position separated from a currently displayed media content in the media content display interface by a specified number of media contents, or a position of the n-th media content in the target media content stream, wherein n is a positive integer. The set number, the specified number, and n may be set as needed. Optionally, when the user browses the target media content stream, the client may obtain x pieces of media content each time the update request is sent. The predetermined position may be in x pieces of media content sent when the client currently starts to send the update request for the m-th time.

For example, the first media content may be added to the position of the next media content of the currently displayed media content in the media content display interface. That is, the first media content is located behind the currently displayed media content and adjacent to the currently displayed media content.

The timing of adding the first media content to the target media content stream is not limited. For example, when a trigger operation for indicating to display the media content display interface is received, the first media content associated with the target interaction information may be added to the target media content stream; or when the target interaction information is received, when the current user switches the media content currently displayed in the media content display interface, or when the media content in the target media content stream is preloaded for the mth time after receiving the target interaction information (m is a positive integer, and a specific value of m is not limited), the first media content may be added to the target media content stream, and so on.

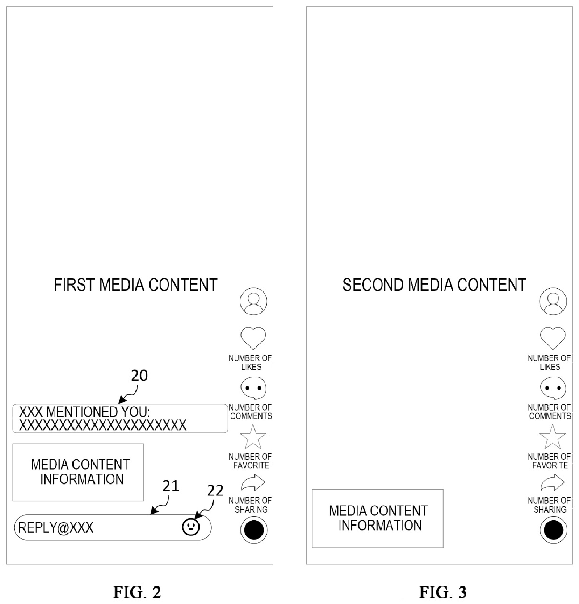

Specifically, after the reception of the target interaction information, the first media content associated with the target interaction information and the interaction message associated with the first media content may be displayed in the media content display interface in response to the reception of the target interaction information, as shown in FIG. 2 (an example in FIG.2 in which the interaction message is taken as the interaction prompt information 20).

In this embodiment, the timing, for displaying the first media content and the interaction message associated with the first media content in the media content display interface in response to the reception of the target interaction information, is not limited.

In some implementations, the first media content and the interaction information associated with the first media content may be displayed in the media content display interface after the target interaction information is received, that is, when the media content display interface is displayed. For example, for the case that the media content display interface is not displayed when the target interaction information is received, the first media content and the interaction message associated with the first media content may be displayed in the media content display interface, when the trigger operation for indicating to display the media content display interface is received. In addition, for the case that the media content display interface is displayed when the target interaction information is received, the media content currently displayed in the media content display interface may be switched to the first media content when the target interaction information is received, and the interaction message associated with the first media content is displayed in the media content display interface. In such way, the first user may view the first media content and the interaction message associated with the first media content in time.

In some other implementations, after the target interaction message is received, the first media content and the interaction message associated with the first media content may be displayed in the media content display interface upon receiving a display operation for the first media content. For example, after the target interaction message is received, the content currently displayed is still displayed; and when the display operation for the first media content is received, the first media content is displayed in the media content display interface in response to the display operation. For example, for the case that the media content display interface is not currently displayed, in response to the display operation for the first media content, the media content display interface is displayed, and the first media content and the interaction message associated with the first media content are displayed in the media content display interface. In addition, for the case that the media content display interface is currently displayed, the media content displayed in the media content display interface is switched to the first media content in response to the display operation for the first media content, and the interaction message associated with the first media content is displayed in the media content display interface. Therefore, the continuity of content viewing by the first user is maintained, and interference made to the user is avoided.

Optionally, displaying, in response to reception of the target interaction information, the first media content and the interaction message associated with the first media content on the media content display interface comprises: displaying, after receiving the target interaction information and in response to a display operation for the first media content, the first media content, and at least part of target interaction information associated with the first media content and/or interaction prompt information associated with the target interaction information, in the media content display interface, the interaction prompt information prompting the existence of target interaction information associated with the first media content.

The display operation for the first media content may be a trigger operation for indicating to display the first media content in the media content display interface, and may comprise a media content switching operation applied in the media content display interface and/or a trigger operation for indicating to display the media content display interface.

S103: displaying the second media content in the media content display interface in response to a display operation of the second media content.

The display operation for the second media content may be a trigger operation for indicating to display the second media content in the media content display interface, for example, switching the first media content currently displayed in the media content display interface to the second media content, and the like.

Specifically, as shown in FIG. 3, when a display operation for the second media content is received, the second media content may be displayed in the media content display interface. At this time, an interaction message and/or a reply control associated with the second media content may not be displayed in the media content display interface.

In some implementations, the interaction message comprises interaction prompt information, and after displaying the first media content and the interaction message associated with the first media content in the media content display interface, the method further comprises: displaying, in response to a second trigger operation for the interaction prompt information, an interaction information panel of the first media content, and displaying information content of the target interaction information in a target region of the interaction information panel.

The second trigger operation may be a trigger operation that triggers the interaction prompt information displayed in the media content display interface. The execution manner of the second trigger operation is not limited, for example, the second trigger operation may be a click operation applied on interaction prompt information displayed in the media content display interface. The interaction information panel of the first media content may be a panel for displaying information content of the interaction information of the first media content. The target region may be an region in the interaction information panel for displaying the information content of the target interaction information received by the first user, which may be set as needed. For example, the target region may be a display region of the information content of the first interaction information in the interaction information panel and/or a central region of the interaction information panel, and the like.

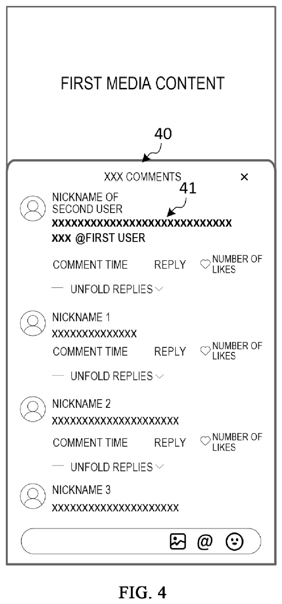

In the foregoing implementation, as shown in FIG. 2, when the first media content is displayed in the media content display interface, the interaction prompt information 20 for the target interaction information may be displayed in the media content display interface. Therefore, when the second trigger operation for the interaction prompt information 20 is received, for example, when it is detected that the first user triggers the interaction prompt information 20 displayed in the media content display interface, the interaction information panel 40 may be displayed in the media content display interface, and the information content of the target interaction information 41 is displayed in the target region of the interaction information panel 40, as shown in FIG. 4 (which shows an example that the target region is the display region of the information content of the first interaction information in the interaction information panel 40), so that the first user can quickly view the information content of the target interaction information 40.

In this embodiment, when the information content of the target interaction information is displayed in the interaction information panel, the information content of the target interaction information has a same or different display style from information content of interaction information other than the target interaction information in the interaction information panel. Optionally, as shown in FIG. 4, the information content of the target interaction information has a different display style from information content of interaction information other than the target interaction information in the interaction information panel, so that the first user can quickly determine the target interaction information in which he/she is mentioned or is shared via direct message.

In the case that the target interaction information is the comment information and the interaction information panel is the comment panel of the first media content, when it is detected that the first user clicks the interaction prompt information displayed in the media content display interface, the comment panel of the first media content may be suspended, and the comment information (that is, the target interaction information) in which the first user is mentioned may be highlighted and put on the top of the comment panel, and the comment information other than the target interaction information in the comment panel may be displayed in a non-highlighted manner.

According to the method for displaying media content provided by the embodiments of this disclosure, the target interaction information sent by at least one second user to the first user is received. The target interaction information is associated with a first media content, In response to reception of the target interaction information, the first media content and an interaction message associated with the first media content are displayed in a media content display interface, wherein the media content display interface displays a target media content stream comprising the first media content and at least one second media content. The media content display interface displays the first media content and the second media content based on different interaction display styles. In response to a display operation of the second media content, the second media content is displayed in the media content display interface. According to the technical scheme, when the interaction information associated with the first media content is received, the first media content and the interaction message associated with the first media content are displayed in the media content display interface which is used for displaying the second media content. In such way, the display manner for the received interaction information and the first media content associated with the interaction information can be enriched, and the operation required for viewing the received interaction information and the first media content associated with the interaction information is simplified.

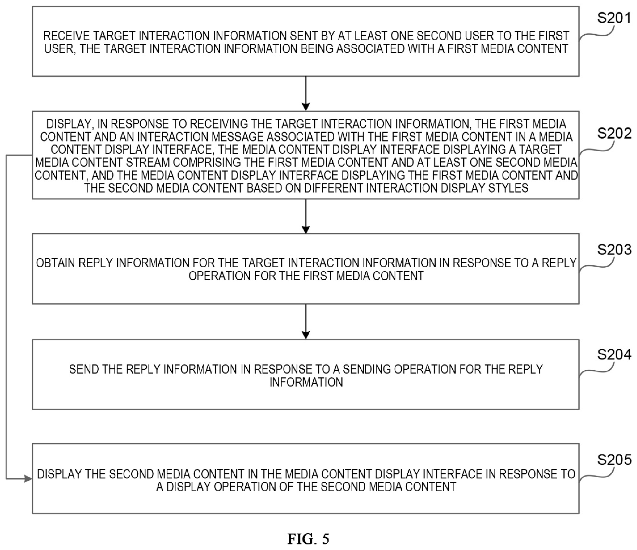

FIG. 5 is a schematic flowchart of another method for displaying media content according to an embodiment of the disclosure. The solution in this embodiment may be combined with one or more optional solutions in the foregoing embodiments. Optionally, after displaying the first media content and the interaction message associated with the first media content on the media content display interface, the method further comprises: obtaining reply information for the target interaction information in response to a reply operation for the first media content; and sending the reply information in response to a sending operation for the reply information.

Correspondingly, as shown in FIG. 5, the method for displaying media content provided in this embodiment may comprise the following steps.

S201: receiving target interaction information sent by at least one second user to the first user, the target interaction information being associated with a first media content.

S202: displaying, in response to reception of the target interaction information, the first media content and an interaction message associated with the first media content in a media content display interface, performing S203 or S205, the media content display interface displaying a target media content stream comprising the first media content and at least one second media content, and the media content display interface displaying the first media content and the second media content based on different interaction display styles.

S203: obtaining reply information for the target interaction information in response to a reply operation for the first media content.

The reply operation for the first media content may be a trigger operation on the target interaction information replied by the user and associated with first media content and sent to the first user. The execution manner of the reply operation is not limited. For example, the reply operation may be a trigger operation applied on the reply control displayed in the media content display interface, or a preset gesture operation applied on the media content display interface, and the like.

Optionally, the reply operation is applied on a reply control, and the reply control comprises an interaction reply control and/or a chat reply control, wherein, the reply control remains displayed in the media content display interface during display of the first media content; or the reply control is displayed in the media content display interface in response to that a predetermined condition is met, the predetermined condition comprising a reception of a first trigger operation, a play duration of the first media content reaching a predetermined duration, or a competition of the play of the first media content.

There is no limit to the number of reply controls displayed in the media content display interface. For example, one or more reply controls may be displayed in the media content display interface. When a plurality of reply controls are displayed in the media content display interface, different reply controls may be used to reply to the target interaction information sent by the second user in different manners. For example, an interaction reply control and/or a chat reply control may be displayed in the media content display interface, the interaction reply control may be used to reply to the target interaction information sent by the second user in a form of the interaction information of the first media content, and the chat reply control may be used to reply to the target interaction information sent by the second user in the form of the chat information.

The timing of displaying the reply control in the media content display interface may be flexibly set as needed. For example, the reply control for the target interaction information may be maintained to be displayed in the media content display interface during the display of the first media content; or the reply control for the target interaction information may be displayed in the media content display interface when the predetermined condition is satisfied.

The predetermined condition may be a condition for displaying a reply control for the target interaction information. For example, the predetermined condition may comprise a reception of a first trigger operation, a play duration of the first media content reaching a predetermined duration, or a competition of the play of the first media content. In this case, when the first media content is initially displayed in the media content display interface, the reply control for the target interaction information may not be displayed in the media content display interface. For example, the interaction message associated with the first media content may be displayed in the media content display interface without displaying the reply control for the target interaction information. When the first trigger operation is received, when the play duration of the first media content reaches the predetermined duration or when the play of first media content is completed, the reply control for the target interaction information is additionally displayed in the media content display interface.

The first trigger operation may be a trigger operation for indicating to display the reply control. For example, the first trigger operation may be a certain operation for the first media content, for example, a like operation, a sharing operation, or a favorite operation for the first media content. The predetermined duration may be, for example, 10s or 15s, or the like, the specific value of which is not limited in this embodiment.

The reply information for the target interaction information may be information used to reply to the target interaction information.

In this embodiment, when a reply operation for the first media content is received, reply information for the target interaction information may be obtained. The manner of obtaining the reply information for the target interaction information may be set flexibly.

In some implementations, as shown in FIG. 2 (showing an example in which the reply control is the interaction reply control 21), at least one candidate information 22 for the first user to select may be displayed in the reply control, and the candidate information may include an expression picture and/or a character. Therefore, when it is detected that the first user triggers some candidate information 22 displayed in the reply control, it may be determined that a reply operation for the first media content is received, and the candidate information 22 triggered by the first user is used as the reply information for the target interaction information.

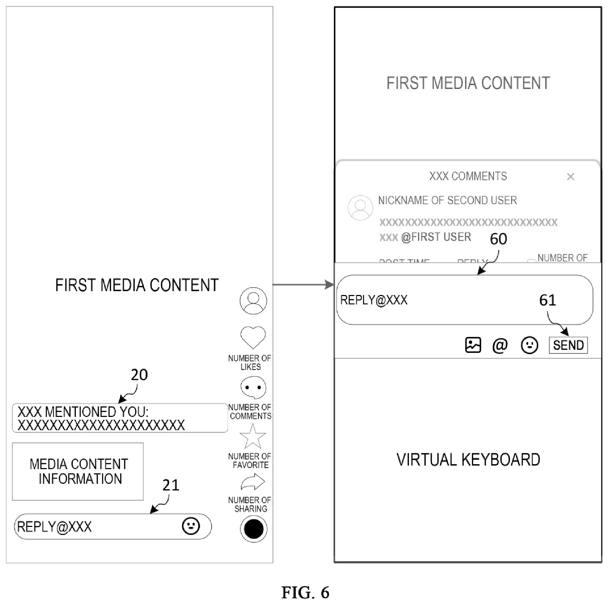

In some other implementations, as shown in FIG. 6 (showing an example in which the reply control is the interaction reply control 21 and the reply information input region is the first reply information input region 60), when it is detected that the first user triggers the reply control displayed in the media content display interface, it may be determined that a reply operation for the first media content is received, and in response to the reply operation, a reply information input region is displayed, so that the first user may input reply information for the target interaction information in the reply information input region, and the reply information inputted by the first user may be obtained.

S204: sending the reply information in response to a sending operation for the reply information.

The sending operation for the reply information may be an operation for indicating to send the obtained reply information, for example, an operation for triggering a sending control corresponding to the reply information.

Specifically, when the sending operation for the reply information is received, the reply information for the target interaction information may be sent. For example, the reply information for the target interaction information may be sent in the form of the chat information and/or the interaction information of the first media content.

In this embodiment, the sending manner of the reply information may be preset or determined based on an operation performed by the first user.

In some implementations, the sending manner of the reply information may be determined based on a reply operation performed by the first user. For example, when the reply operations performed by the first user are different, the reply information may be sent in different manner. In this case, optionally, obtaining the reply information for the target interaction information in response to the reply operation for the first media content comprises at least one of: displaying, in response to a first reply operation for a first interaction control, a first reply information input region for inputting first reply information for the first media content, the first reply information being sent in a form of interaction information of the first media content; displaying, in response to a second reply operation for a second interaction control, a second reply information input region for inputting second reply information for the first media content, the second reply information being sent in a form of a chat message.

The first interaction control may be an interaction control for indicating to display the first reply information input region. Optionally, the first interaction control includes at least one of the interaction message and the interaction reply control. The first reply operation may be a reply operation applied on the first interaction control. The first reply information input region may be a reply information input region for the first user to input reply information sent in the form of interaction information. The reply information input region may be considered as an region for the user to input the information content of the reply information. The first reply information may be reply information sent in the form of interaction information.

The second interaction control may be an interaction control for indicating to display the second reply information input region. Optionally, the second interaction control comprises a chat reply control. The second reply operation may be a reply operation applied on the second interaction control. The second reply information input region may be a reply information input region for the first user to input reply information sent in the form of chat information. The second reply information may be reply information sent in a form of chat information.

In the above implementations, when the first reply operation for the first interaction control displayed in the media content display interface is received, the first reply information input region may be displayed for the first user to input the first reply information sent in the form of the interaction information of the first media content; when the second reply operation for the second interaction control displayed in the media content display interface is received, the second reply information input region may be displayed for the first user to input the second reply information sent in the form of the chat information.

In the case that the first interaction control comprises the first reply control and the second interaction control comprises the second reply control, in this embodiment, when the first media content is displayed in the media content display interface, the first reply control and/or the second reply control for the target interaction information may be displayed in the media content display interface.

As shown in FIG. 6, when it is detected that the first user triggers the first reply control 21 displayed in the media content display interface, it may be determined that the first reply operation is received. In response to the first reply operation, the first reply information input region 60 is displayed. In such way, the first user may input the first reply information in the first reply information input region 60, and the first reply information inputted by the first user in the first reply information input region 60 may be obtained. When it is detected that the first user triggers the sending control 61 associated with the first reply information input region 60, it may be determined that the sending operation for the first reply information is received. In response to the sending operation, the first reply information is sent in the form of the interaction information of the first media content. For example, when the target interaction information is the comment information of the first media content, the first reply information may be sent in the form of the secondary comment information of the target interaction information. It may be understood that, when the first reply information input region 60 is displayed, the interaction information of the first media content in which the first user is mentioned and/or the interaction panel displaying the interaction information of the first media content may be maintained to be displayed at the same time.

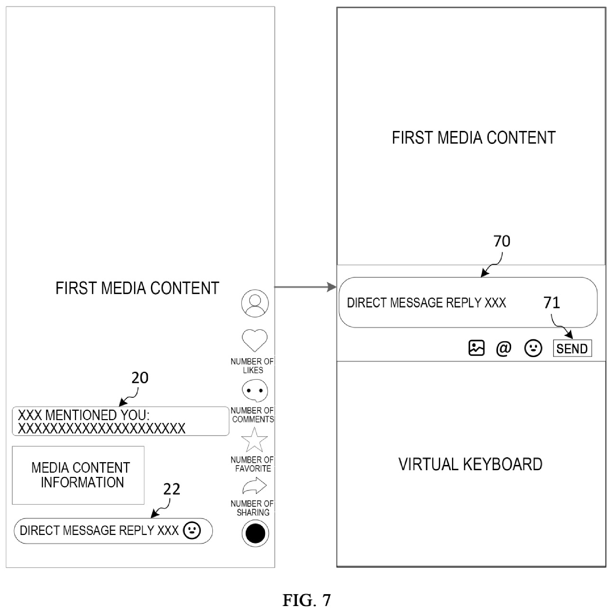

As shown in FIG. 7, when it is detected that the first user triggers the second reply control 22 displayed in the media content display interface, it may be determined that the second reply operation is received. In response to the second reply operation, the second reply information input region 70 is displayed. In such way, the first user may input the second reply information in the second reply information input region 70, and the second reply information inputted by the first user in the second reply information input region 70 may be obtained. When it is detected that the first user triggers the sending control 71 associated with the second reply information input region 70, it is determined that the sending operation for the second reply information is received. In response to the sending operation, the second reply information is sent in the form of chat information to the second user sending the target interaction information.

In some other implementations, the sending form of the reply information may be determined based on a sending operation performed by the first user. For example, when the sending operations performed by the first user are different, the reply information may be sent in different forms. In this case, optionally, sending the reply information in response to a sending operation for the reply information comprises at least one of: sending, in response to a first sending operation for the reply information, the reply information in a form of interaction information of the first media content; sending, in response to a second sending operation for the reply information, the reply information in a form of a chat message to a second user sending the target interaction information.

The first sending operation may be a trigger operation for indicating to send the obtained reply information in a form of interaction information of the first media content; and the second sending operation may be a trigger operation for indicating to send the obtained reply information in the form of chat message to the second user who sends the target interaction information. The implementation manners of the first sending operation and the second sending operation are not limited. For example, the first sending operation and the second sending operation may be applied on different sending controls and/or are different preset gesture operations. In the case that they are applied on different sending controls, the first sending operation may applied on the first sending control, and the second sending operation may applied on the second sending control.

In the above implementations, when the first sending operation for the reply information is received, the reply information may be sent in the form of the interaction information of the first media content; when the second sending operation for the reply information is received, the chat information may be sent in the form of the chat information to the second user sending the target interaction information.

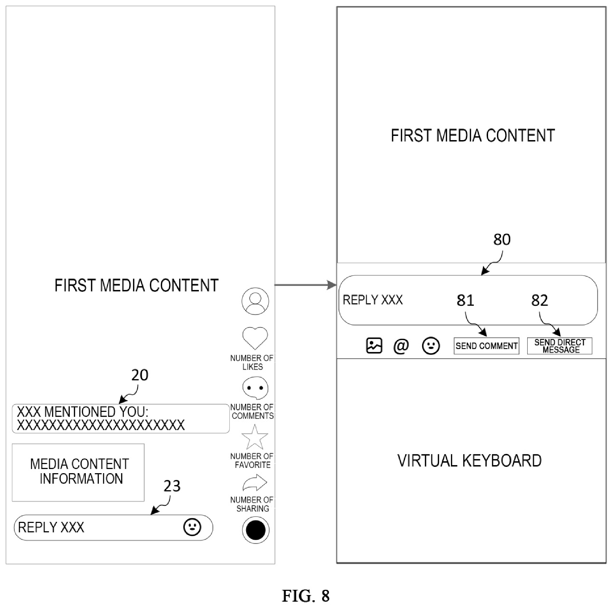

For example, as shown in FIG. 8, when the first media content is displayed in the media content display interface, the preset reply control 23 may be displayed in the media content display interface. When it is detected that the first user triggers the preset reply control 23, it may be determined that a reply operation for the first media content is received. In response to the reply operation, a preset reply information input region 80 is displayed. In such way, the first user may input reply information in the preset reply information input region 80, and the reply information inputted by the first user in the preset reply information input 80 may be obtained. When it is detected that the first user triggers the first sending control 81 associated with the preset reply information input region 80, it may be determined that the first sending operation for the reply information is received. In response to the first sending operation, the reply information is sent as the interaction information of the first media content, for example, the reply information is sent as the comment information of the first media content. When it is detected that the first user triggers the second sending control 82 associated with the preset reply information input region 80, it may be determined that the second sending operation for the reply information is received. In response to the second sending operation, the reply information is sent as the chat information. That is, the reply information is sent in the form of the chat information to the second user sending the target interaction information.

In this embodiment, after the obtained reply information is sent in response to the sending operation for the reply information, the reply information may or may not be displayed. For example, after the obtained reply information is sent, the reply information can be directly displayed; or the reply information is not displayed, but the sending prompt information of the reply information is displayed. The first user is prompted that the reply information is sent successfully through the sending prompt information, and when it is detected that the first user triggers the sending prompt information, the reply information is displayed. In this case, optionally, after sending the reply information, the method further comprises: displaying the reply information; or displaying sending prompt information of the reply information, the sending prompt information is configured to trigger display of the reply information.

In some implementations, when the obtained reply information is sent in the form of the interaction information of the first media content, the reply information may be displayed after the reply information is sent. For example, the interaction information panel of the first media content is displayed in the media content display interface, and the reply information sent in the form of the interaction information is displayed in the interaction information panel. And/or, when the obtained reply information is sent in the form of chat information, the sending prompt information of the reply information may be displayed in the media content display interface after the reply information is sent, and the reply information sent in the form of the chat information is displayed when it is detected that the first user triggers the sending prompt information.

In this embodiment, when displaying the sent reply information, the interface in which the reply information is displayed may be set as needed. For example, the reply information may be displayed in the media content display interface, or the reply information may be displayed in the information display interface. In this case, optionally, displaying the reply information comprises: displaying the reply information in the media content display interface; or switching a current interface from the media content display interface to an information display interface, and displaying the reply information in the information display interface.

The information display interface may be an interface for displaying the sent reply information. When the reply information is sent in the form of interaction information, the information display interface may be an interface for displaying the interaction information of the first media content. When the reply information is sent in the form of the chat information, the information display interface may be an interface for displaying chat information between the second user sending the target interaction information and the first user.

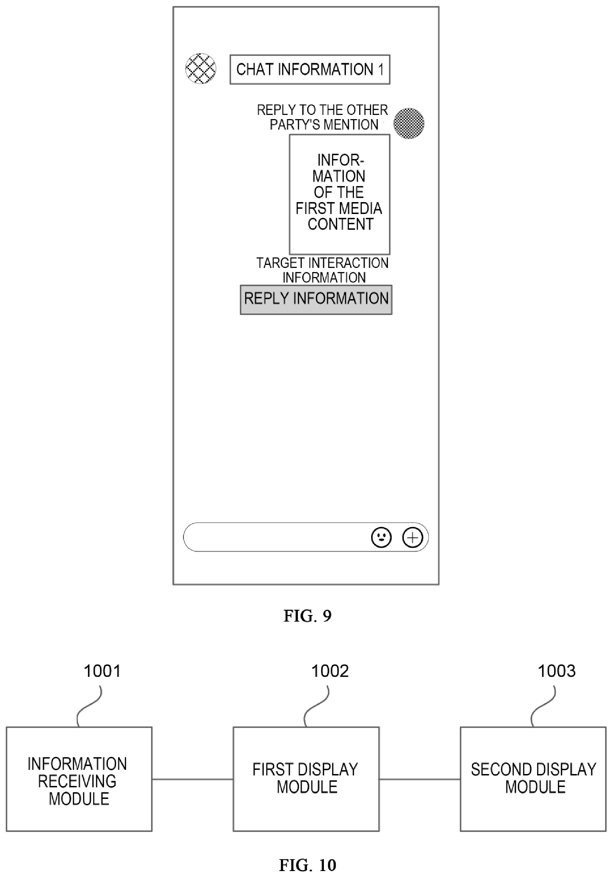

In some implementations, for example, when the reply information is sent in the form of interaction information, the reply information may be displayed in the media content display interface. For example, an interaction information panel of the first media content is displayed in the media content display interface, and the reply information is displayed in the interaction information panel. And/or, when the reply information is sent in the form of chat information, the reply information may be displayed in the media content display interface or a chat interface (that is, an information display interface) between the first user and the second user sending the target interaction information. For example, the current interface may be switched from the media content display interface to the chat interface between the first user and the second user sending the target interaction information, and the reply information is displayed in the chat interface, as shown in FIG. 9. The chat region between the first user and the second user sending the target interaction information may also be displayed in the media content display interface, and the reply information is displayed in the chat region. It may be understood that the first media content and the reply information may be displayed in association in the chat region. For example, the reply information is displayed in the form of a reference reply.

Still referring to FIG. 9, when the reply information sent in the form of the chat information is displayed in the chat interface or the chat region, the related information and/or the target interaction information of the first media content may be further displayed, which may be specifically set as needed. The related information of the first media content may be, for example, identification information or a cover of the first media content. The related information may be used to trigger the display of the first media content.

S205: displaying the second media content in the media content display interface in response to a display operation of the second media content.

According to the method for displaying media content provided by the embodiment, the operation required by the first user to reply the target interaction information sent by the second user can be simplified, and the user experience is improved.

FIG. 10 is a schematic structural diagram of an apparatus for displaying media content according to an embodiment of the disclosure. The apparatus may be configured on a first user side. The apparatus may be implemented by software and/or hardware, and may be disposed in an electronic device, and is typically configured in a mobile phone or a tablet computer. The apparatus may display an interaction message associated with the interaction information received by the user in the media content display interface by performing a media for displaying media content. As shown in FIG. 10, the apparatus for displaying media content provided in this embodiment may comprises: an information receiving module 1001, a first display module 1002 and a second display module 1003. The information receiving module 1001 is configured to receive target interaction information sent by at least one second user to the first user, wherein the target interaction information is associated with the first media content. The first display module 1002 is configured to display, in response to reception of the target interaction information, the first media content and an interaction message associated with the first media content in a media content display interface, wherein the media content display interface displays a target media content stream comprising the first media content and at least one second media content, and the media content display interface displays the first media content and the second media content based on different interaction display styles. The second display module 1003 is configured to display the second media content in the media content display interface in response to a display operation of the second media content.

With the apparatus for displaying media content provided in this embodiment, the target interaction information sent by at least one second user to the first user is receive through the information receiving module. The target interaction information is associated with a first media content. In response to reception of the target interaction information, the first media content and an interaction message associated with the first media content are displayed through the first display module in a media content display interface. The media content display interface displays a target media content stream comprising the first media content and at least one second media content, and the media content display interface displays the first media content and the second media content based on different interaction display styles. The second media content is displayed in the media content display interface through the second display module, in response to a display operation of the second media content. According to the technical scheme, when the interaction information associated with the first media content is received, the first media content and the interaction message associated with the first media content are displayed in the media content display interface which is used for displaying the second media content. In this way, the display manner of received interaction information and the first media content associated with the interaction information can be enriched, and the operation required for viewing the received interaction information and the first media content associated with the interaction information is simplified.

In the above solution, the first display module 1002 is configured to: display, after receiving the target interaction information and in response to a display operation for the first media content, the first media content, and at least part of target interaction information associated with the first media content and/or interaction prompt information associated with the target interaction information, in the media content display interface, the interaction prompt information prompting the existence of target interaction information associated with the first media content.

In the above solution, the interaction prompt information may comprise at least part of information content of the target interaction information.

Further, the apparatus for displaying media content provided in this embodiment may comprise: an information obtaining module configured to, after displaying the first media content and the interaction message associated with the first media content in the media content display interface, obtain reply information for the target interaction information in response to a reply operation for the first media content; and an information sending module configured to send the reply information in response to a sending operation for the reply information.

In the above solution, the information obtaining module may comprise at least one of: a first information obtaining module configured to display, in response to a first reply operation for a first interaction control, a first reply information input region for inputting first reply information for the first media content, the first reply information being sent in a form of interaction information of the first media content; a second information obtaining module configured to display, in response to a second reply operation for a second interaction control, a second reply information input region for inputting second reply information for the first media content, the second reply information being sent in a form of a chat message.

In the above solution, the first interaction control may comprise at least one of the interaction message or an interaction reply control, and/or, the second interaction control comprises a chat reply control.

In the above solution, the information sending module may comprise at least one of: a first information sending module configured to send, in response to a first sending operation for the reply information, the reply information in a form of interaction information of the first media content; a second information sending module configured to send, in response to a second sending operation for the reply information, the reply information in a form of a chat message to a second user sending the target interaction information.

Further, the apparatus for displaying media content provided in this embodiment may comprise an information displaying module configured to: after sending the reply information, display the reply information; or after sending the reply information, display sending prompt information of the reply information, the sending prompt information configured to trigger display of the reply information.

In above solution, the information displaying module is configured to: display the reply information in the media content display interface; or switch a current interface from the media content display interface to an information display interface, and display the reply information in the information display interface.

In above solution, the reply operation may be applied on a reply control, and the reply control comprises an interaction reply control and/or a chat reply control. The reply control remains displayed in the media content display interface during display of the first media content; or the reply control is displayed in the media content display interface in response to that a predetermined condition is met. The predetermined condition comprising a reception of a first trigger operation, a play duration of the first media content reaching a predetermined duration, or a competition of the play of the first media content.

In above solution, the interaction message may comprise interaction prompt information. The apparatus for displaying media content provided in this embodiment may further comprise a panel displaying module configured to display, after displaying the first media content and the interaction message associated with the first media content in the media content display interface, in response to a second trigger operation for the interaction prompt information, an interaction information panel of the first media content, and display information content of the target interaction information in a target region of the interaction information panel.

In above solution, the information content of the target interaction information has a different display style from information content of interaction information other than the target interaction information in the interaction information panel.

In above solution, the first media content is configured to be added to a predetermined position of the target media content stream in response to the reception of the target interaction information, the predetermined position comprising a position separated from a currently displayed media content in the media content display interface by a specified number of media contents, or a position of the n-th media content in the target media content stream, wherein n is a positive integer.

The apparatus for displaying media content provided in the embodiments of the disclosure may perform the method for displaying media content provided in any embodiment of the disclosure, and has functional modules and beneficial effects corresponding to the method for displaying media content. For technical details not described in detail in this embodiment, reference may be made to the method for displaying media content provided by any embodiment of the disclosure.

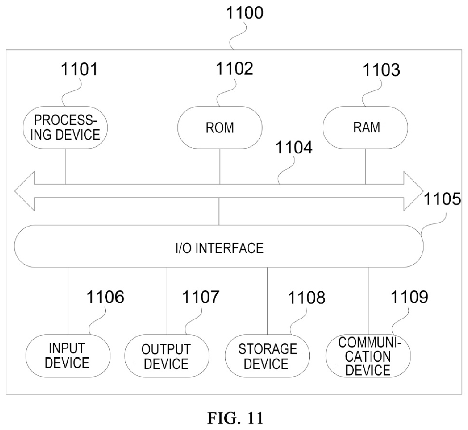

Reference is made to FIG. 11 below, which shows a structural schematic diagram of an electronic device (for example terminal device) 1100 suitable for implementing the embodiments of the present disclosure. The terminal device in embodiments of the present disclosure may include, without limitation to, a mobile terminal such as a mobile phone, a laptop computer, a digital broadcast receiver, a PDA (personal digital assistant), a PAD (tablet computer), a PMP (portable multimedia player), an on-board terminal (e.g., on-board navigation terminal) and the like, as well as a fixed terminal such as a digital TV, a desktop computer and the like. The electronic device shown in FIG. 11 is merely an example and should not be construed to impose any limitations on the functionality and use scope of the embodiments of the present disclosure.

As shown in FIG. 11, the electronic device 1100 may comprises processing device (e.g., a central processor, a graphics processor) 1101 which is capable of performing various appropriate actions and processes in accordance with programs stored in a read only memory (ROM) 1102 or programs loaded from storage device 1108 to a random access memory (RAM) 1103. In the RAM 1103, there are also stored various programs and data required by the electronic device 1100 when operating. The processing device 1101, the ROM 1102 and the RAM 1103 are connected to one another via a bus 1104. An input/output (I/O) interface 1105 is also connected to the bus 1104.

Usually, the following devices may be connected to the I/O interface 1105: an input device 1106 including a touch screen, a touch pad, a keyboard, a mouse, a camera, a microphone, an accelerometers, a gyroscope, or the like; an output device 1107, such as a liquid-crystal display (LCD), a loudspeaker, a vibrator, or the like; a storage device 1108, such as a magnetic tape, a hard disk or the like; and a communication device 1109. The communication device 1109 allows the electronic device 1100 to perform wireless or wired communication with other device so as to exchange data with other device. While FIG. 11 shows the electronic device 1100 with various device, it should be understood that it is not required to implement or have all of the illustrated device. Alternatively, more or less device may be implemented or exist.

Specifically, according to the embodiments of the present disclosure, the procedures described with reference to the flowchart may be implemented as computer software programs. For example, the embodiments of the present disclosure comprise a computer program product that comprises a computer program embodied on a non-transitory computer-readable medium, the computer program including program codes for executing the method shown in the flowchart. In such an embodiment, the computer program may be loaded and installed from a network via the communication device 1109, or installed from the storage device 1108, or installed from the ROM 1102. The computer program, when executed by the processing device 1101, perform the above functions defined in the method of the embodiments of the present disclosure.

It is noted that the computer readable medium of the present disclosure can be a computer readable signal medium, a computer readable storage medium or any combination thereof. The computer readable storage medium may be, for example, but is not limited to, an electronic, magnetic, optical, electromagnetic, infrared or semiconductor system, apparatus or device, or any combination of the foregoing. More specific examples of the computer readable storage medium may include, without limitation to, the following: an electrical connection with one or more conductors, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium including or storing a program that may be used by or in conjunction with an instruction executing system, apparatus or device. In the present disclosure, the computer readable signal medium may include data signals propagated in the baseband or as part of the carrier waveform, in which computer readable program code is carried. Such propagated data signals may take a variety of forms, including without limitation to electromagnetic signals, optical signals, or any suitable combination of the foregoing. The computer readable signal medium may also be any computer readable medium other than a computer readable storage medium that may send, propagate, or transmit a program for use by, or in conjunction with, an instruction executing system, apparatus, or device. The program code contained on the computer readable medium may be transmitted by any suitable medium, including, but not limited to, a wire, a fiber optic cable, RF (radio frequency), etc., or any suitable combination thereof.

In some implementations, the client and server may communicate utilizing any currently known or future developed network protocol such as HTTP (HyperText Transfer Protocol) and may be interconnected with digital data communications (e.g., communication networks) of any form or medium. Examples of communication networks include local area networks ("LANs"), wide area networks ("WANs"), inter-networks (e.g., the Internet), and end-to-end networks (e.g., ad hoc end-to-end networks), as well as any currently known or future developed networks.

The above computer readable medium may be contained in the above electronic device; or it may exist separately and not be assembled into the electronic device.

The above computer readable medium carries one or more programs which, when executed by the electronic device, cause the electronic device to: receive target interaction information sent by at least one second user to the first user, the target interaction information being associated with a first media content; display, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; and display the second media content in the media content display interface in response to a display operation of the second media content.

Computer program code for carrying out operations of the present disclosure may be written in one or more program designing languages or a combination thereof, which include without limitation to an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Units involved in the embodiments of the present disclosure as described may be implemented in software or hardware. The name of a unit does not form any limitation on the module itself.

The functionality described above may at least partly be performed, at least in part, by one or more hardware logic components. For example, and in a non-limiting sense, example types of hardware logic components that can be used may include: field-programmable gate arrays (FPGA), application specific integrated circuits (ASICs), application specific standard products (ASSPs), systems on chips (SOCs), complex programmable logic devices (CPLDs), etc.

In the context of the present disclosure, the machine readable medium may be a tangible medium that can retain and store programs for use by or in conjunction with an instruction execution system, apparatus or device. The machine readable medium of the present disclosure can be a machine readable signal medium or a machine readable storage medium. The machine readable medium may include, but is not limited to, an electronic, magnetic, optical, electromagnetic, infrared or semiconductor system, apparatus or device, or any combination of the foregoing. More specific examples of the machine readable storage medium may include, without limitation to, the following: an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the disclosure, example 1 provides a method for displaying media content, applied on a first user side, the method comprising: receiving target interaction information sent by at least one second user to the first user, the target interaction information being associated with a first media content; displaying, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; displaying the second media content in the media content display interface in response to a display operation of the second media content.

According to one or more embodiments, the method of example 2 according to example 1, displaying, in response to reception of the target interaction information, the first media content and the interaction message associated with the first media content in the media content display interface comprises: displaying, after receiving the target interaction information and in response to a display operation for the first media content, the first media content, and at least part of target interaction information associated with the first media content and/or interaction prompt information associated with the target interaction information, in the media content display interface, the interaction prompt information prompting the existence of target interaction information associated with the first media content.

According to one or more embodiments, the method of example 3 according to example 2, the interaction prompt information comprises at least part of information content of the target interaction information.

According to one or more embodiments, the method of example 4 according to example 1, after displaying the first media content and the interaction message associated with the first media content in the media content display interface, the method further comprises: obtaining reply information for the target interaction information in response to a reply operation for the first media content; and sending the reply information in response to a sending operation for the reply information.

According to one or more embodiments, the method of claim 5 according to example 4, obtaining the reply information for the target interaction information in response to the reply operation for the first media content comprises at least one of: displaying, in response to a first reply operation for a first interaction control, a first reply information input region for inputting first reply information for the first media content, the first reply information being sent in a form of interaction information of the first media content; displaying, in response to a second reply operation for a second interaction control, a second reply information input region for inputting second reply information for the first media content, the second reply information being sent in a form of a chat message.

According to one or more embodiments, the method of example 6 according to example 5, the first interaction control comprises at least one of the interaction message or an interaction reply control, and/or, the second interaction control comprises a chat reply control.

According to one or more embodiments, the method of example 7 according to example 4, sending the reply information in response to a sending operation for the reply information comprises at least one of: sending, in response to a first sending operation for the reply information, the reply information in a form of interaction information of the first media content; sending, in response to a second sending operation for the reply information, the reply information in a form of a chat message to a second user sending the target interaction information.

According to one or more embodiments, the method of example 8 according to example 4, after sending the reply information, the method further comprises: displaying the reply information; or displaying sending prompt information of the reply information, the sending prompt information configured to trigger display of the reply information.

According to one or more embodiments, the method of example 9 according to example 8, displaying the reply information comprises: displaying the reply information in the media content display interface; or switching a current interface from the media content display interface to an information display interface, and displaying the reply information in the information display interface.

According to one or more embodiments, the method of example 10 according to example 4, the reply operation is applied on a reply control, and the reply control comprises an interaction reply control and/or a chat reply control, wherein, the reply control remains displayed in the media content display interface during display of the first media content; or the reply control is displayed in the media content display interface in response to that a predetermined condition is met, the predetermined condition comprising a reception of a first trigger operation, a play duration of the first media content reaching a predetermined duration, or a competition of the play of the first media content.

According to one or more embodiments, the method of example 11 according to any of examples 1-10, the interaction message comprises interaction prompt information, and after displaying the first media content and the interaction message associated with the first media content in the media content display interface, the method further comprises: displaying, in response to a second trigger operation for the interaction prompt information, an interaction information panel of the first media content, and displaying information content of the target interaction information in a target region of the interaction information panel.

According to one or more embodiments, the method of example 12 according to example 11, the information content of the target interaction information has a different display style from information content of interaction information other than the target interaction information in the interaction information panel.

According to one or more embodiments, the method of example 13 according to any of examples 1-10, the first media content is configured to be added to a predetermined position of the target media content stream in response to the reception of the target interaction information, the predetermined position comprising a position separated from a currently displayed media content in the media content display interface by a specified number of media contents, or a position of the n-th media content in the target media content stream, wherein n is a positive integer.

According to one or more embodiments, example 14 provides an apparatus for displaying media content, applied on a first user side, the apparatus comprising: an information receiving module configured to receive target interaction information sent by at least one second user to the first user, the target interaction information being associated with the first media content; a first display module configured to display, in response to reception of the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles; and a second display module configured to display the second media content in the media content display interface in response to a display operation of the second media content.

According to one or more embodiments, example 15 provides an electronic device, comprising: one or more processor; and a memory storing one or more programs that, when executed by the one or more processor, cause the one or more processor to perform the method for displaying media content according to any of examples 1-13.

According to one or more embodiments, example 16 provides a computer-readable storage medium having stored thereon computer instructions that, when executed by a processor, implement the method for displaying media content according to any of examples 1-13.

The foregoing description is merely illustration of the preferred embodiments of the present disclosure and the technical principles used herein. Those skilled in the art should understand that the disclosure scope involved therein is not limited to the technical solutions formed from a particular combination of the above technical features, but should also cover other technical solutions formed by any combination of the above technical features or their equivalent features without departing from the above disclosure concepts, e.g., technical solutions formed by replacing the above features with technical features having similar functions disclosed (without limitation) in the present disclosure.

In addition, although various operations have been depicted in a particular order, it should not be construed as requiring that the operations be performed in the particular order shown or in sequential order of execution. Multitasking and parallel processing may be advantageous in certain environments. Likewise, although the foregoing discussion includes several specific implementation details, they should not be construed as limiting the scope of the present disclosure. Some features described in the context of separate embodiments may also be realized in combination in a single embodiment. On the contrary, various features described in the context of a single embodiment may also be realized in a plurality of embodiments, either individually or in any suitable sub-combinations.

While the present subject matter has been described using language specific to structural features and/or method logic actions, it should be understood that the subject matter defined in the appended claims is not necessarily limited to the particular features or actions described above. On the contrary, the particular features and actions described above are merely example forms of realizing the claims.

## Claims

1. A method for displaying media content, applied on a first user client, the method comprising:
receiving target interaction information sent by at least one second user to the first user, the target interaction information being associated with a first media content;
displaying, in response to receiving the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles;
displaying the second media content in the media content display interface in response to a display operation of the second media content.

2. The method according to claim 1, wherein displaying, in response to receiving the target interaction information, the first media content and the interaction message associated with the first media content in the media content display interface comprises:
displaying, after receiving the target interaction information and in response to a display operation for the first media content, the first media content, and at least part of target interaction information associated with the first media content and/or interaction prompt information associated with the target interaction information, in the media content display interface, the interaction prompt information prompting the existence of target interaction information associated with the first media content.

3. The method according to claim 2, wherein the interaction prompt information comprises at least part of information content of the target interaction information.

4. The method according to claim 1, wherein after displaying the first media content and the interaction message associated with the first media content in the media content display interface, the method further comprises:
obtaining reply information for the target interaction information in response to a reply operation for the first media content; and
sending the reply information in response to a sending operation for the reply information.

5. The method according to claim 4, wherein obtaining the reply information for the target interaction information in response to the reply operation for the first media content comprises at least one of:
displaying, in response to a first reply operation for a first interaction control, a first reply information input region for inputting first reply information for the first media content, the first reply information being sent in a form of interaction information of the first media content;
displaying, in response to a second reply operation for a second interaction control, a second reply information input region for inputting second reply information for the first media content, the second reply information being sent in a form of a chat message.

6. The method according to claim 5, wherein the first interaction control comprises at least one of the interaction message or an interaction reply control, and/or, the second interaction control comprises a chat reply control.

7. The method according to claim 4, wherein sending the reply information in response to a sending operation for the reply information comprises at least one of:
sending, in response to a first sending operation for the reply information, the reply information in a form of interaction information of the first media content;
sending, in response to a second sending operation for the reply information, the reply information in a form of a chat message to a second user sending the target interaction information.

8. The method according to claim 4, wherein after sending the reply information, the method further comprises:
displaying the reply information; or
displaying sending prompt information of the reply information, the sending prompt information configured to trigger display of the reply information.

9. The method according to claim 8, wherein displaying the reply information comprises:
displaying the reply information in the media content display interface; or
switching a current interface from the media content display interface to an information display interface, and displaying the reply information in the information display interface.

10. The method according to claim 4, wherein the reply operation is applied on a reply control, and the reply control comprises an interaction reply control and/or a chat reply control, wherein,
the reply control remains displayed in the media content display interface during display of the first media content; or
the reply control is displayed in the media content display interface in response to that a predetermined condition is met, the predetermined condition comprising a reception of a first trigger operation, a play duration of the first media content reaching a predetermined duration, or a competition of the play of the first media content.

11. The method according to any of claims 1-10, wherein the interaction message comprises interaction prompt information, and after displaying the first media content and the interaction message associated with the first media content in the media content display interface, the method further comprises:
displaying, in response to a second trigger operation for the interaction prompt information, an interaction information panel of the first media content, and displaying information content of the target interaction information in a target region of the interaction information panel.

12. The method according to claim 11, wherein the information content of the target interaction information has a different display style from information content of interaction information other than the target interaction information in the interaction information panel.

13. The method according to any of claims 1-10, wherein the first media content is configured to be added to a predetermined position of the target media content stream in response to receiving the target interaction information, the predetermined position comprising a position separated from a currently displayed media content in the media content display interface by a specified number of media contents, or a position of the n-th media content in the target media content stream, wherein n is a positive integer.

14. An apparatus for displaying media content, applied on a first user client, the apparatus comprising:
an information receiving module configured to receive target interaction information sent by at least one second user to the first user, the target interaction information being associated with the first media content;
a first display module configured to display, in response to receiving the target interaction information, the first media content and an interaction message associated with the first media content in a media content display interface, the media content display interface displaying a target media content stream comprising the first media content and at least one second media content, and the media content display interface displaying the first media content and the second media content based on different interaction display styles;
a second display module configured to display the second media content in the media content display interface in response to a display operation of the second media content.

15. An electronic device, comprising:
at least one processor; and
a memory communicatively connected to the at least one processor; wherein,
the memory stores a computer program executable by the at least one processor, and the computer program is executed by the at least one processor to enable the at least one processor to perform the method for displaying media content according to any of claims 1-13.

16. A computer-readable storage medium storing computer instructions that, when executed by a processor, implement the method for displaying media content according to any of claims 1-13.
